# FASCICULE DE BREVET EUROPEEN

(11) **EP 4 227 035 B1**
(45) Date de publication et mention de la délivrance du brevet: **13.11.2024**
(21) Numéro de dépôt: 23154390.1
(22) Date de dépôt: 01.02.2023
(51) Int. Cl.: B23K 20/12, B23K 20/26

(54) **ACCESSOIRE D'INTERFACE DE TRAVAIL, KIT DE TRAVAIL COMPRENANT UN TEL ACCESSOIRE, ET PROCÉDÉ DE SOUDAGE PAR FRICTION-MALAXAGE A L'AIDE DE DE KIT DE TRAVAIL**
ARBEITSSCHNITTSTELLENZUBEHÖR, ARBEITSKIT MIT EINEM SOLCHEN ZUBEHÖR, UND REIBRÜHRSCHWEISSVERFAHREN UNTER VERWENDUNG EINES SOLCHEN KITS
WORK INTERFACE ACCESSORY, WORK KIT COMPRISING SUCH ACCESSORY, AND FRICTION STIR WELDING METHOD USING SUCH WORK KIT

(30) Priorité: 10.02.2022 FR 2201172
(43) Date de publication de la demande: 16.08.2023
(73) Titulaire: STIRWELD, 35760 Saint-Grégoire (FR)
(72) Inventeur: SEVESTRE, Gilles, 44100 NANTES (FR); IDOT, Simon, 35230 NOYAL CHATILLON SUR SEICHE (FR)
(74) Mandataire: Regimbeau

(56) Documents cités:
- WO-A1-2017/102953
- CN-A- 105 750 725
- CN-U- 204 470 674
- US-A1- 2014 140 779

## Description

L'invention concerne un accessoire d'interface de travail, destiné à être monté sur une tête de soudage par friction-malaxage, ainsi qu'un kit comportant cet accessoire.

Les têtes de soudage par friction-malaxage permettent de réaliser des soudures bord à bord de deux pièces. Pour ce faire, un pion rotatif saillant bordé par un épaulement est mis en rotation par la tête et est déplacé le long du joint entre les deux bords des pièces, pour réaliser par friction-malaxage du matériau des pièces une ligne de soudure le long de ce joint.

Le document WO 2017/102953A1 décrit un exemple de tête de soudage par friction-malaxage, destinée à être fixée sur une machine pour réaliser un soudage par friction malaxage à l'aide d'un outil destiné à être fixé à un porte-outil, faisant partie de la tête, la tête comportant un bâti extérieur destiné à être fixé à un châssis de la machine, une pièce d'entraînement, destinée à être entraînée par une broche d'entraînement, qui fait partie de la machine et qui est montée rotative autour d'un axe par rapport au châssis, pour entraîner en rotation le porte-outil autour de l'axe par mise en rotation de la pièce d'entraînement, le porte-outil étant fixé à un arbre monté rotatif autour de l'axe dans un coulisseau, lequel est guidé en translation selon l'axe dans le bâti, au moins une pièce d'accouplement étant guidée en translation selon l'axe sur la pièce d'entraînement, la pièce d'accouplement et la pièce d'entraînement ayant respectivement des premiers et deuxièmes organes d'accouplement en rotation l'un avec l'autre autour de l'axe pour entraîner en rotation la pièce d'accouplement à partir de la pièce d'entraînement, la pièce d'accouplement et l'arbre étant accouplés en rotation autour de l'axe pour entraîner en rotation l'arbre à partir de la pièce d'accouplement, au moins un élément élastique de report des efforts axiaux étant interposé entre le coulisseau et le bâti.

Le document CN 105 750 725A décrit une tête de soudage par friction-malaxage, ayant en partie inférieure un épaulement périphérique duquel dépasse un pion central et une lame de fraisage.

Le document US 2014/140 779A1 décrit un outil de soudage par friction-malaxage comportant un pion central 8 dépassant d'un épaulement périphérique 9, avec possibilité d'ajouter 1 adaptateur 10 de fraisage à l'extrémité de cet outil 1.

L'un des problèmes de ces têtes de soudage est que la soudure effectuée par le déplacement de la tête et la rotation du pion génère des aspérités et des bavures saillantes résiduelles le long de la ligne de soudure. L'autre problème est qu'il n'est pas possible d'ajouter un outil de travail de manière automatisée

Un travail supplémentaire peut donc être nécessaire pour éliminer ces aspérités et bavures ou peut être nécessaire pour d'autres opérations, d'enlèvement de matière par exemple.

Un objectif de l'invention est d'obtenir un accessoire d'interface de travail, qui permette d'éliminer ces aspérités et bavures en utilisant la tête de soudage par friction-malaxage ou qui permette toute autre opération d'enlèvement de matière.

A cet effet, un premier objet de l'invention est un kit de travail suivant la revendication 1.

Grâce à l'invention, l'accessoire d'interface permet d'entraîner en rotation un outil de travail permettant d'éliminer les aspérités et des bavures saillantes résiduelles apparaissant le long de la ligne de soudure suite à l'opération de soudage par friction-malaxage effectuée par le pion de la tête seule ou d'autres opérations d'enlèvement de matière. L'accessoire d'interface permet d'entraîner en rotation l'outil de travail à partir de la rotation de la partie rotative de la tête faisant tourner son pion. L'accessoire d'interface permet ainsi de détourer la ligne de soudure par l'outil de travail à partir de la tête. Cette opération de détourage de la ligne de soudure peut être effectuée rapidement après la réalisation de la ligne de soudure par friction-malaxage par la tête.

Les revendications 2 à 16 concernent des modes de réalisation du kit de travail suivant l'invention.

Un deuxième objet de l'invention est un procédé de soudage de pièces à l'aide du kit de travail suivant la revendication 17.

La revendication 18 concerne un mode de réalisation du procédé de soudage suivant l'invention.

L'invention sera mieux comprise à la lecture de la description qui va suivre, donnée uniquement à titre d'exemple non limitatif en référence aux figures ci-dessous des dessins annexés.
[Fig. 1] représente une vue schématique en perspective de dessous d'un accessoire d'interface de travail suivant un mode de réalisation de l'invention.
[Fig. 2] représente une vue schématique en coupe verticale d'un accessoire d'interface de travail suivant un mode de réalisation de l'invention.
[Fig. 3] représente une vue schématique de dessus d'un accessoire d'interface de travail suivant un mode de réalisation de l'invention.
[Fig. 4] représente une vue schématique en coupe verticale d'un accessoire d'interface de travail suivant un mode de réalisation de l'invention.
[Fig. 5] représente une vue schématique en coupe verticale d'un accessoire d'interface de travail suivant un mode de réalisation de l'invention.
[Fig. 6] représente une vue schématique de dessous d'un accessoire d'interface de travail suivant un mode de réalisation de l'invention.
[Fig. 7] représente une vue schématique en perspective éclatée d'un kit de travail suivant un mode de réalisation de l'invention.
[Fig. 8A] représente une vue schématique en coupe verticale d'un accessoire d'interface de travail fixé à une tête de soudage suivant un mode de réalisation de l'invention.
[Fig. 8B] représente une vue schématique de côté d'un accessoire d'interface de travail fixé à une tête de soudage suivant un mode de réalisation de l'invention.
[Fig. 9] représente une vue schématique en coupe verticale d'une pince actionnable de préhension de l'accessoire d'interface de travail suivant un mode de réalisation de l'invention.
[Fig. 10] représente un organigramme d'un procédé de soudage à l'aide du kit de travail suivant un mode de réalisation de l'invention.
[Fig. 11] représente une première étape du procédé de soudage suivant un mode de réalisation de l'invention.
[Fig. 12] représente une deuxième étape du procédé de soudage suivant un mode de réalisation de l'invention.
[Fig. 13] représente une troisième étape du procédé de soudage suivant un mode de réalisation de l'invention.
[Fig. 14] représente une quatrième étape du procédé de soudage suivant un mode de réalisation de l'invention.
[Fig. 15] représente une cinquième étape du procédé de soudage suivant un mode de réalisation de l'invention.
[Fig. 16] représente une vue schématique de côté d'une pince actionnable de préhension de l'accessoire d'interface de travail suivant un autre mode de réalisation de l'invention.

### Accessoire 10 d'interface de travail

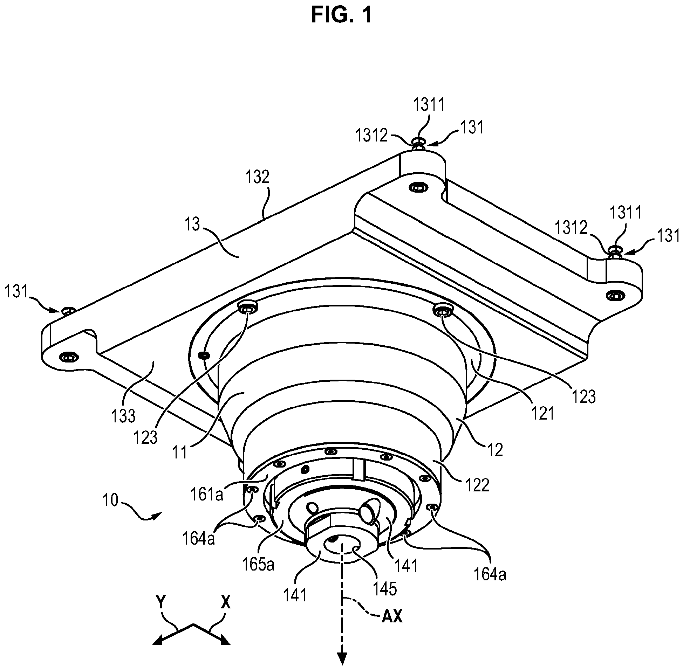

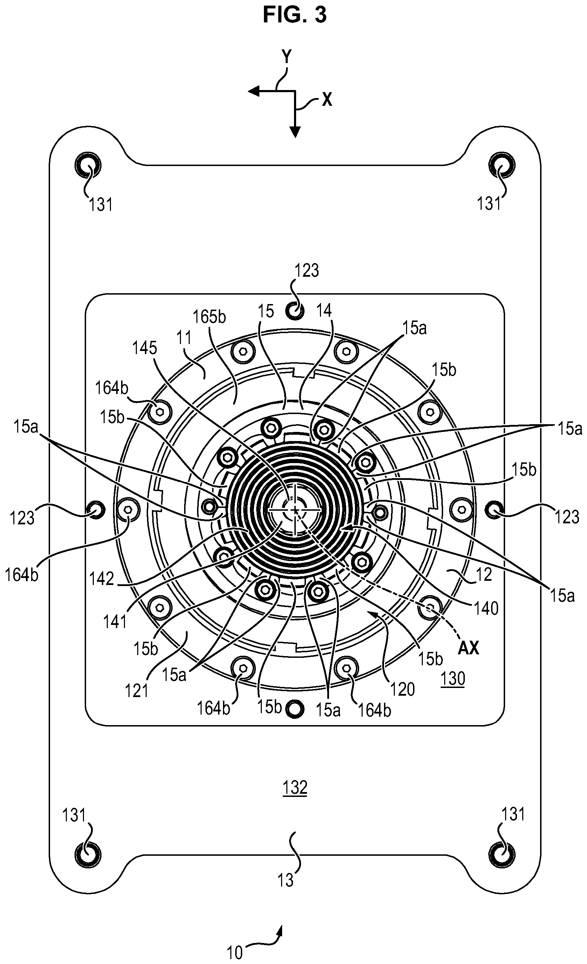

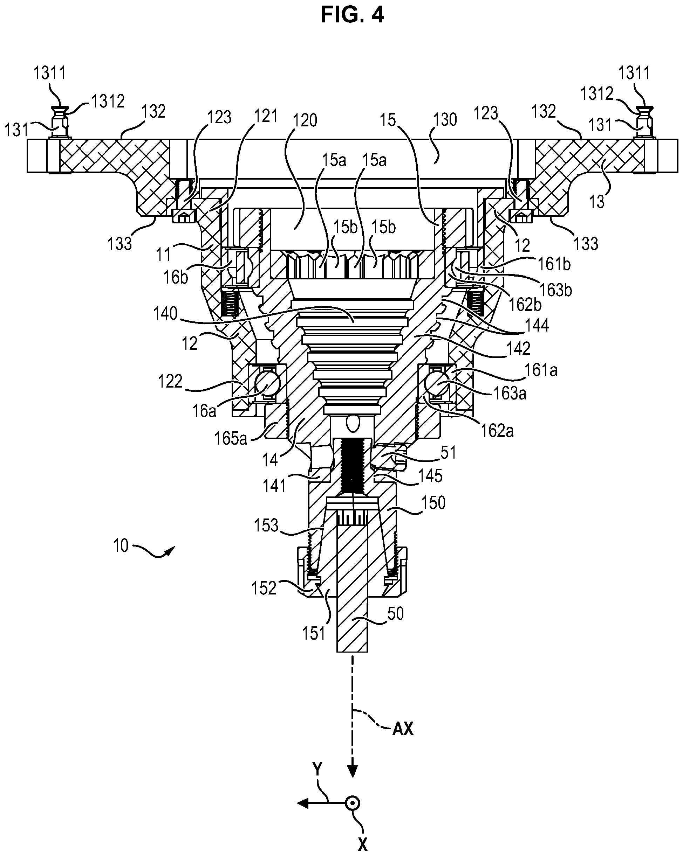

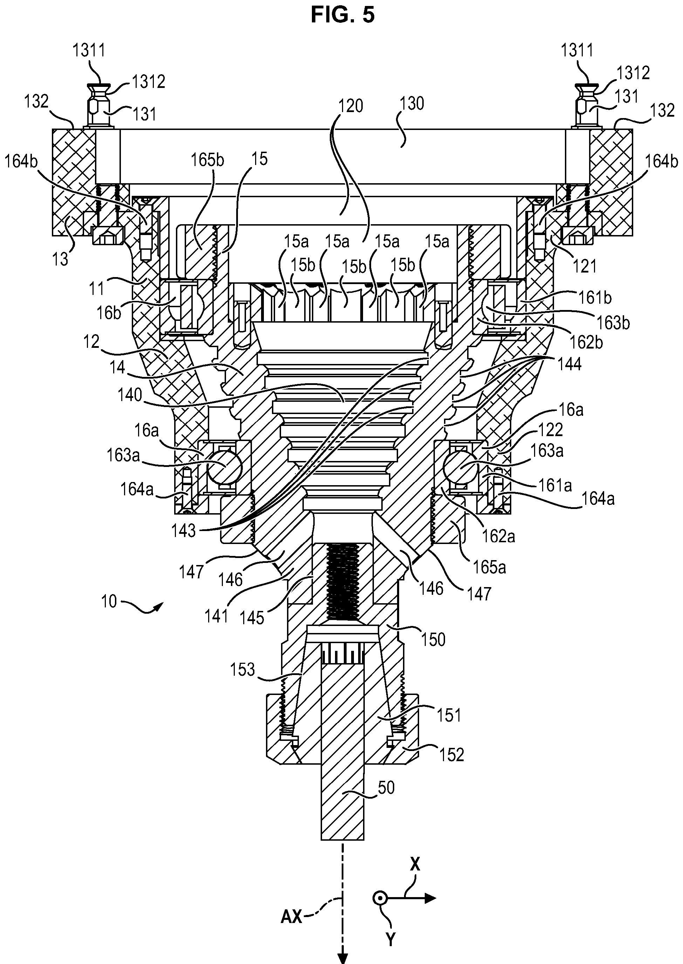

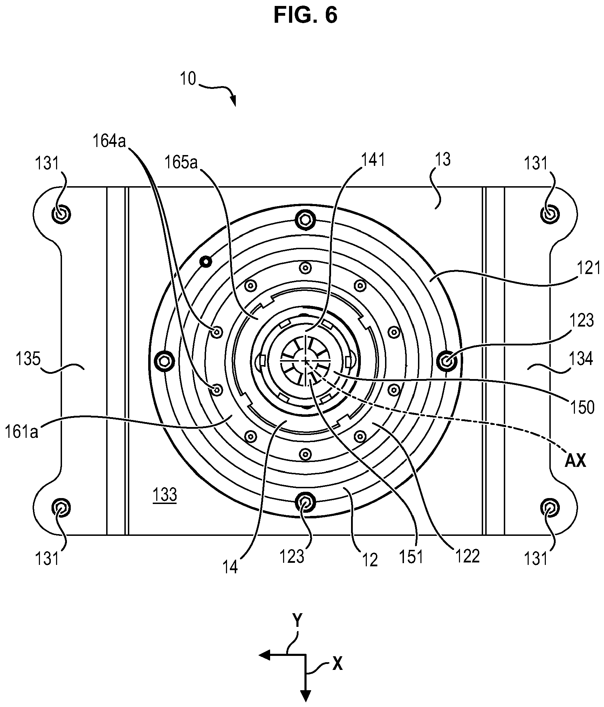

On décrit ci-dessous d'abord en référence aux figures 1 à 7, 8A et 8B un exemple d'accessoire 10 d'interface de travail d'un kit 500 de travail suivant l'invention.

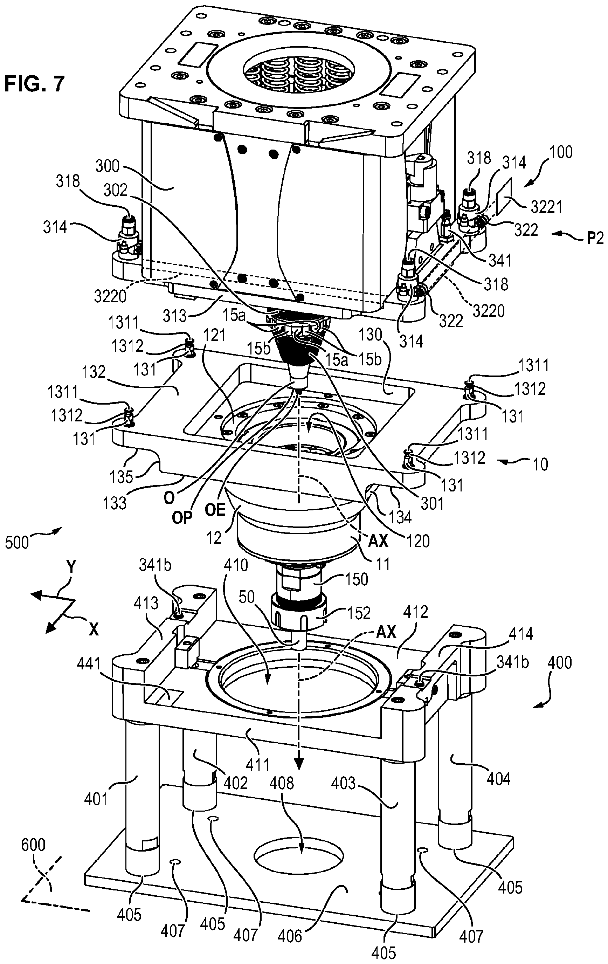

L'accessoire 10 d'interface de travail est destiné à être monté sur une tête 100 de soudage par friction-malaxage, dont un exemple sera décrit ensuite en référence aux figures 7, 8A, 8B et 11 à 15. L'accessoire 10 d'interface de travail est apte à être monté sur la tête 100 de soudage par friction-malaxage et est apte à être démonté par rapport à la tête 100 de soudage par friction-malaxage. L'accessoire 10 d'interface de travail est distinct de la tête 100 de soudage par friction-malaxage. L'accessoire 10 d'interface de travail peut être séparé de la tête 100 de soudage par friction-malaxage et être fixé à la tête 100 de soudage par friction-malaxage.

Aux figures, l'axe AX est considéré comme étant vertical, en étant orienté vers le bas. Les directions allant de l'intérieur vers l'extérieur sont les direction radiales (ou transversales) partant de l'axe AX et sont donc horizontales. La direction horizontale X est perpendiculaire à l'autre direction horizontale Y. Bien entendu l'axe AX pourrait être orienté autrement que verticalement, par exemple horizontalement ou autre.

L'accessoire 10 comporte un corps extérieur 11 formé principalement par une première paroi latérale 12 s'étendant de haut en bas autour de l'axe AX. La première paroi latérale 12 a une partie supérieure 121 (ou bord 121 d'introduction)délimitant un premier logement 120 ouvert sur le dessus, permettant l'introduction de la partie rotative (301, 302 ou mandrin d'entraînement 301, 302) de la tête 100 de soudage par friction-malaxage dans le premier logement 120 et la sortie de la tête 100 de soudage par friction-malaxage hors du premier logement 120.

L'accessoire 10 comporte une platine supérieure 13, qui est fixée autour de la partie supérieure 121, par exemple par des boulonnages ou des vissages 123 ou autres. Bien entendu, la platine supérieure 13 pourrait être d'une seule pièce avec la partie supérieure 121 de la première paroi latérale 12. Une première ouverture supérieure 130 de la platine supérieure 13 débouche dans le premier logement 120 et dans le corps extérieur 11. La platine 13 comporte des parties 131 de fixation (ou attaches amovibles 131) servant à la fixation amovible de la platine supérieure 13 contre la tête 100 de soudage. Les parties 131 de fixation font saillie de la surface supérieure 132 de la platine 13 vers le haut, dans l'exemple représenté aux figures 1 à 7, 8A, 8B.

L'accessoire 10 comporte un arbre central 14 monté tournant dans le premier logement 120 dans le corps extérieur 11. L'arbre central 14 est apte à tourner autour de l'axe AX de rotation par rapport à la première paroi latérale 12 du corps extérieur 11 et à la platine 13. L'arbre central 14 dépasse vers le bas suivant l'axe AX par sa deuxième partie inférieure 141 (ou deuxième bord inférieur 141) hors de la première partie inférieure 122 (ou premier bord inférieur 122) de la première paroi latérale 12. Cette deuxième partie inférieure 141 de l'arbre central 14, saillante vers le bas, sert à porter un outil 50 de travail ou un support 150 d'un outil 50 de travail. L'outil 50 de travail ou le support 150 d'un outil 50 de travail peut être fixé d'une manière amovible à la deuxième partie inférieure 141 saillante de l'arbre central 14. L'outil 50 de travail peut être fixé par l'intermédiaire d'un mandrin 151 de serrage positionné dans l'ouverture inférieure 153 du support 150, le mandrin 151 de serrage étant entouré par une bague 152 de serrage vissée autour du support 150, l'outil 50 faisant saillie hors du mandrin 151 de serrage, de la bague 152 de serrage et du support 150 vers le bas.

L'arbre central 14 comporte une deuxième paroi latérale 142 délimitant un deuxième logement 140 ouvert sur le dessus. Ce deuxième logement 140 est configuré pour recevoir la partie rotative 301, 302 de la tête 100 de soudage. Ce deuxième logement se trouve donc dans le premier logement 120 dans la première paroi latérale 12 du corps extérieur 11. La première ouverture supérieure 130, le premier logement 120 et le deuxième logement 140 sont raccordé entre eux et sont situés autour de l'axe AX.

Dans l'arbre central 14 se trouve un manchon 15 intérieurement denté d'accouplement, centré sur l'axe AX et prolongeant le deuxième logement 140. Ce manchon 15 intérieurement denté d'accouplement fait partie de l'arbre central 14 et est solidaire en rotation de l'arbre central 14 et de la deuxième paroi latérale 142 autour de l'axe AX. Le manchon 15 intérieurement denté d'accouplement est fixé à la deuxième paroi latérale 142 ou est d'une seule pièce avec la deuxième paroi latérale 142.

Le manchon 15 intérieurement denté d'accouplement est configuré pour engrener avec une couronne 115 extérieurement dentée de la partie rotative (301, 302) de la tête 100 de soudage, lorsque cette couronne 115 est introduite dans le manchon 15.

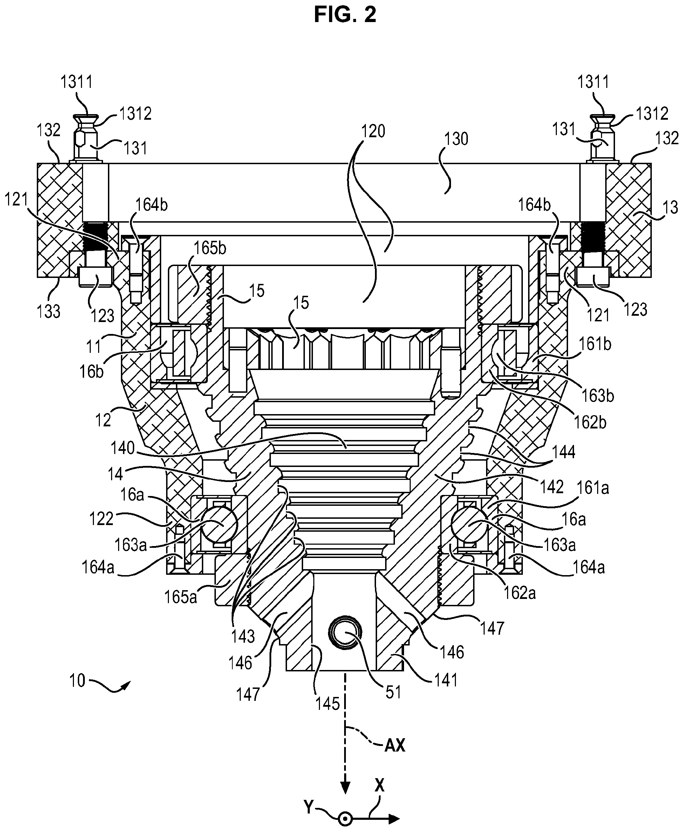

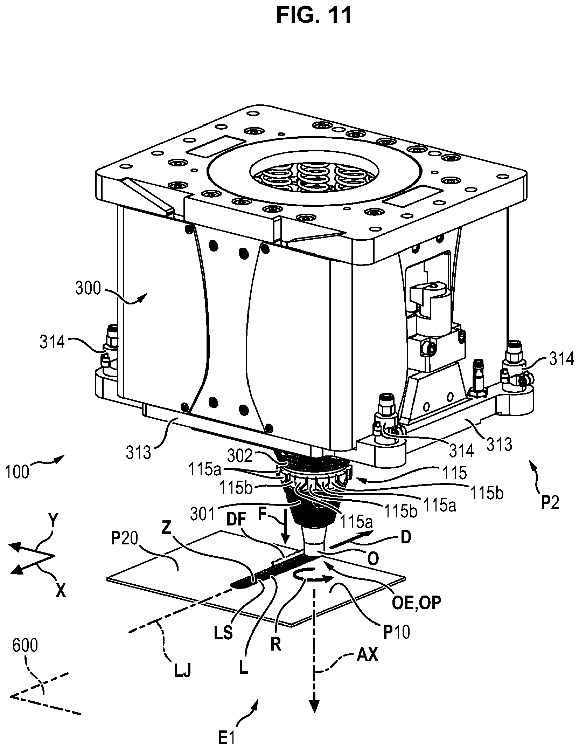

Le manchon 15 intérieurement denté d'accouplement comporte des premières dents intérieures 15a (ou crabots 15a) tournées vers l'intérieur du manchon 15 et réparties autour de l'axe AX, ainsi que des premières encoches intérieures 15b, qui sont situées entre les premières dents intérieures 15a et qui sont également tournées vers l'intérieur du manchon 15 et réparties autour de l'axe AX, ainsi que représenté aux figures 2, 3, 4 et 5. La couronne 115 comporte des deuxièmes dents extérieures 115a (ou crabots 115a) tournées vers l'extérieur de la couronne 115 et réparties autour de l'axe AX, ainsi que des deuxièmes encoches extérieures 115b, qui sont situées entre les deuxièmes dents extérieures 115a et qui sont également tournées vers l'extérieur de la couronne 115 et réparties autour de l'axe AX, ainsi que représenté aux figures 7 et 11. Lorsque la couronne 115 est introduite dans le manchon 15, cet engrènement s'effectue par le fait que les deuxièmes dents extérieures 115a (ou crabots 115a) de la couronne 115 pénètrent dans les premières encoches intérieures 15b du manchon 15 et par le fait que les premières dents intérieures 15a (ou crabots 15a) du manchon 15 pénètrent dans des deuxièmes encoches extérieures 115b de la couronne 115. La rotation de la partie rotative (301, 302) de la tête 100 de soudage solidaire de la couronne 115 engrenant dans le manchon 15 entraîne alors en rotation autour de l'axe AX l'arbre central 14 par rapport à la paroi latérale 12 du corps 11 extérieur de l'accessoire 10.

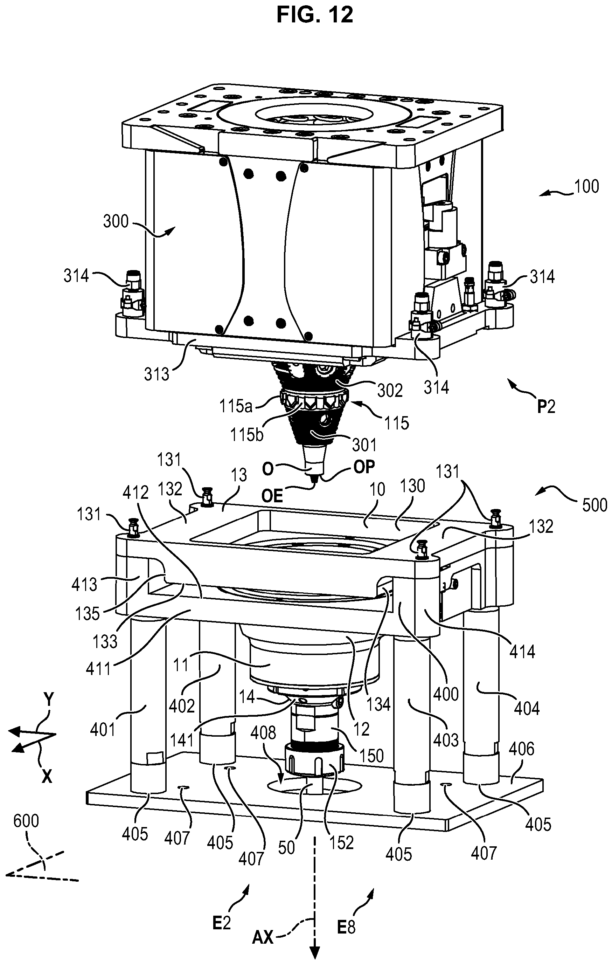

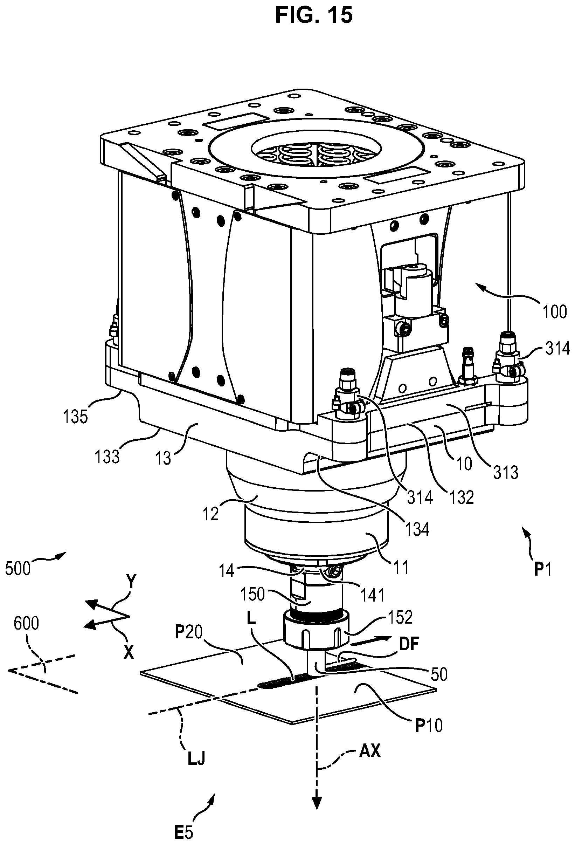

On parvient ainsi à entraîner en rotation à partir de la tête 10 de soudage l'outil 50 de travail fixé à l'arbre central 14, pour effectuer ainsi sur les pièces ou sur la ligne L de soudure ayant été effectuée au préalable par la tête 100 de soudage par friction-malaxage entre les pièces P10 et P20 (soudage lors de l'étape E1 de la figure 11), un travail possiblement autre que le soudage ainsi que cela sera décrit ci-dessous en référence aux figures 12 à 15. Notamment, l'outil 50 de travail peut être un outil d'usinage, comme par exemple un outil de fraisage, mais peut être également autre. On peut ainsi par l'outil 50 de travail, qui est entraîné en rotation à partir le tête 100 par l'intermédiaire de l'accessoire 10 d'interface, parfaire la ligne L de soudure ayant été effectuée au préalable par l'outil O de soudage friction-malaxage, en enlevant par exemple des aspérités DF collatérales de la ligne L de soudure lors de l'étape E5, ainsi que représenté à la figure 15.

L'accessoire 10 suivant l'invention permet également de se dispenser d'ôter de la tête 100 l'outil O de soudage par friction-malaxage (pion OE et épaulement OP de l'outil O) qui peut être laissé fixé à la tête 100 et être introduit dans le deuxième logement 140 de l'arbre central 14 de l'accessoire 10 d'interface, lors des étapes E3, E4, E5, E6 et E7. Cela représente un gain de temps pour effectuer le traitement de la ligne L de soudure par l'outil 50 de travail entraîné en rotation à partir de la tête 100.

La deuxième paroi latérale 142 peut avoir transversalement à l'axe AX une largeur diminuant globalement du manchon 15 intérieurement denté d'accouplement à la deuxième partie inférieure 141 de l'arbre central 14. Cela permet de ménager dans l'arbre central 14 un deuxième logement 140 ayant également transversalement à l'axe AX une largeur diminuant globalement du manchon 15 intérieurement denté d'accouplement à la deuxième partie inférieure 141. Un espace est laissé dans le deuxième logement 140 autour de la partie rotative 301, 302 de la tête 100 lorsque celle-ci s'y trouve dans la position d'engrènement de la couronne extérieure 115 dans le manchon 15.

Suivant un mode de réalisation de l'invention, la deuxième paroi latérale 142 peut comporter des rainures intérieures 143 dans le deuxième logement 140 et/ou des rainures extérieures 144. Ces rainures intérieures 143 et/ou ces rainures extérieures 144 peuvent être transversales à l'axe AX de rotation. Cela permet d'avoir une plus grande surface de refroidissement ou de dissipation thermique dans l'arbre central 14 et/ou à l'extérieur de l'arbre central 14, lorsque la partie rotative 301, 302 de la tête 100 entraîne l'arbre central 14 en rotation à grande vitesse autour de l'axe AX.

Suivant un mode de réalisation de l'invention, dans la deuxième partie inférieure 141 de l'arbre central 14 se trouve un évidement inférieur central 145 ouvert vers le bas, dans lequel peut être fixé l'outil 50 de travail ou le support 150 de l'outil 50 de travail. A cet effet, l'outil 50 de travail (ou le support 150 de l'outil 50 de travail) inséré par le bas dans l'évidement inférieur central 145 peut être fixé par une vis 51 (ou par d'autres organes de fixation) vissée dans un taraudage de la deuxième partie inférieure 141 de l'arbre central 14 et serrant l'outil 50 de travail ou le support 150 de l'outil 50 de travail.

Suivant un mode de réalisation de l'invention, la deuxième partie inférieure 141 de l'arbre central 14 comporte, un (ou plusieurs) canal 146 de traversée d'air entre le deuxième logement 140 intérieur à l'arbre central 14 et une surface extérieure 147 de la deuxième partie inférieure 141 de cet arbre central 14. Le (ou les) canal 146 de traversée d'air est distinct de l'évidement inférieur central 145. L'accessoire 10 permet ainsi de faire passer un courant d'air de ventilation par l'ouverture supérieure 130 à travers le premier logement 120 et le deuxième logement 140 dans l'arbre central 14 et d'évacuer la chaleur dégagée par la rotation de la partie rotative 301, 302 de la tête 100 par le canal 146 de traversée d'air vers l'extérieur. A cet effet, la tête 100 peut comporter une source d'air comprimé de ventilation, permettant d'envoyer par exemple par des orifices 346 de sortie d'air ménagées dans le deuxième arbre 302 de la tête 100, de l'air comprimé de ventilation vers le premier logement 120 et le deuxième logement 140, lorsque la partie rotative 301, 302 de la tête 100 est dans la position d'engrènement de la couronne extérieure 115 dans le manchon 15.

Suivant un mode de réalisation de l'invention, un (ou plusieurs) un palier 16a, 16b de support de rotation de l'arbre central 14 autour de l'axe AX de rotation est disposé entre l'arbre central 14 et la première paroi latérale 12. Il peut être par exemple prévu un palier supérieur 16b de support de rotation de l'arbre central 14 autour de l'axe AX de rotation, par exemple autour du manchon 15. Il peut être par exemple prévu un palier inférieur 16a de support de rotation de l'arbre central 14 autour de l'axe AX de rotation, par exemple un peu au-dessus de la partie inférieure 141 et plus en bas que le palier supérieur 16b.

Le palier 16a de support de rotation de l'arbre central 14 peut être un montage de roulement 16a éléments roulants (par exemple billes ou rouleaux ou autres) ou à éléments frottants (par exemple palier lisse ou autres). Par exemple, le montage de roulement 16a à éléments roulants comporte au moins un premier guide 161a de roulement fixé à la première paroi latérale 12, au moins un deuxième guide 162a de roulement, qui est fixé à l'arbre central 14 et qui est rotatif par rapport au premier guide 161a de roulement, et des premiers éléments roulants 163a disposés entre le premier guide 161a de roulement et le deuxième guide 162a de roulement. Des vis inférieures 164a peuvent servir à maintenir le premier guide 161a de roulement fixé par le bas à la première paroi latérale 12. Une bague inférieure 165a peut être vissée autour de l'arbre central 14 sous le deuxième guide 162a de roulement pour fixer cette dernière.

Le palier 16b de support de rotation de l'arbre central 14 peut être un montage de roulement 16b à éléments roulants (par exemple billes ou rouleaux ou autres) ou à éléments frottants (par exemple palier lisse ou autres). Par exemple, le montage de roulement 16b à éléments roulants comporte au moins un premier guide 161b de roulement fixé à la première paroi latérale 12, au moins un deuxième guide 162b de roulement, qui est fixé à l'arbre central 14 et qui est rotatif par rapport au premier guide 161b de roulement, et des deuxièmes éléments roulants 163b disposés entre le premier guide 161b de roulement et le deuxième guide 162b de roulement. Des vis supérieures 164b peuvent servir à maintenir le premier guide 161b de roulement fixé par le haut à la partie supérieure 121 de la première paroi latérale 12. Une bague supérieure 165b peut être vissée autour de l'arbre central 14, à savoir autour du manchon 15, sur le deuxième guide 162b de roulement pour fixer cette dernière.

### Tête 100 de soudage par friction-malaxage

La tête 100 de soudage par friction-malaxage du kit 500 de travail suivant l'invention est décrite ci-dessous en référence aux figures 7, 8A, 8B et 11 à 15.

La tête 100 de soudage par friction malaxage comporte un bâti extérieur 300, destiné à être fixé par le haut à un châssis d'une machine non représentée. Cette machine peut être une machine-outil, par exemple une machine-outil à commande numérique. La machine comporte une broche d'entraînement, qui est montée rotative autour de l'axe AX par rapport à un châssis.

La tête 100 comporte un deuxième arbre 302 rotatif, qui fait saillie sous le bâti extérieur 300 et sur lequel doit être fixé un outil O de soudage par friction malaxage, saillant vers le bas. A cet effet, l'outil O est par exemple fixé à un porte-outil 301, lui-même fixé au deuxième arbre 302. Le porte-outil 301 peut-être d'une seule pièce avec le deuxième arbre 302 ou distinct du deuxième arbre 302. L'outil O peut être d'une seule pièce avec le porte-outil 301 ou distinct du porte-outil 301. La couronne extérieure 115 peut être fixée entre le porte-outil 301 et le deuxième arbre 301 ou être fixée autour du deuxième arbre 302 ou être fixée autour du porte-outil 301. La tête 100 comporte dans le bâti extérieur 300 un mécanisme 700 de transmission de rotation de la broche d'entraînement au deuxième arbre 302 et donc à l'outil O de soudage par friction malaxage autour de l'axe AX par rapport au bâti extérieur 300. On pourra se reporter au document EP-B-3 389 913 en ce qui concerne la tête 100 de de soudage par friction malaxage.

L'outil O de soudage par friction malaxage comporte par exemple un pion OE d'extrémité centrale, qui est saillant vers le bas et qui fixé, par l'intermédiaire d'un épaulement OP transversal à l'axe AX et plus en haut que le pion OE, à une partie supérieure fixée au porte-outil 301. Par exemple, le porte-outil 301 comporte un évidement central 41 de logement de l'extrémité supérieure de la partie de l'outil O, par des moyens de fixation, par exemple par vissage ou autre. Par exemple, l'arbre 302 comporte à son extrémité basse un autre évidement central 42 de logement de l'extrémité supérieure du porte-outil 301, par des moyens de fixation, par exemple par vissage ou autre.

Ainsi que représenté à la figure 11, le soudage par friction malaxage (en anglais FSW pour « Friction Stir Welding ») est effectué par mise en rotation de l'outil O autour de l'axe AX (selon la flèche R), pour faire pénétrer le pion OE dans les au moins deux pièces à souder P10 et P20, jusqu'à faire buter l'épaulement OP contre ces pièces P10 et P20, puis déplacement de l'outil O selon une trajectoire prescrite D le long d'une ligne de joint LJ pour réaliser la soudure L. Les pièces P10 et P20 peuvent avoir été placées bord contre bord afin de réaliser la soudure, l'outil O traversant totalement ou partiellement les pièces P10 et P20. Ou la pièce P10 peut être placée en dessous de la pièce P20 afin de réaliser une soudure par transparence, l'outil O traversant totalement ou partiellement la pièce P10. La rotation de l'outil O crée donc une zone Z de malaxage de la matière des pièces P10 et P20. Le soudage par friction malaxage nécessite un mouvement de rotation R, un mouvement D d'avance et un effort F de forge. Les pièces à souder P10 et P20 ont été fixées au préalable à une table 600 de travail.

Un mécanisme de préhension actionnable (préhenseur actionnable) comportant un système de pinces de serrage actionnables (pouvant être à billes ou à vérin hélicoïdal pivotant ou autre) est prévu pour fixer et désolidariser la platine 13 de l'accessoire 10 par rapport à une deuxième platine 313 de la tête 100.

Suivant un mode de réalisation de l'invention, représenté aux figures 1 à 15, chaque partie 131 de fixation de l'accessoire 10 d'interface de travail comporte une tirette 1311, qui est tournée vers le haut et qui est fixée à la platine 13.

Le bâti 300 de la tête 100 comporte une deuxième platine 313 d'appui contre la platine supérieure 13. La deuxième platine 313 porte des pinces actionnables 314 tournées vers le bas et permettant de saisir et de relâcher les parties 131 de fixation. Les pinces 314 forme un système de pinces de serrage du mécanisme de préhension.

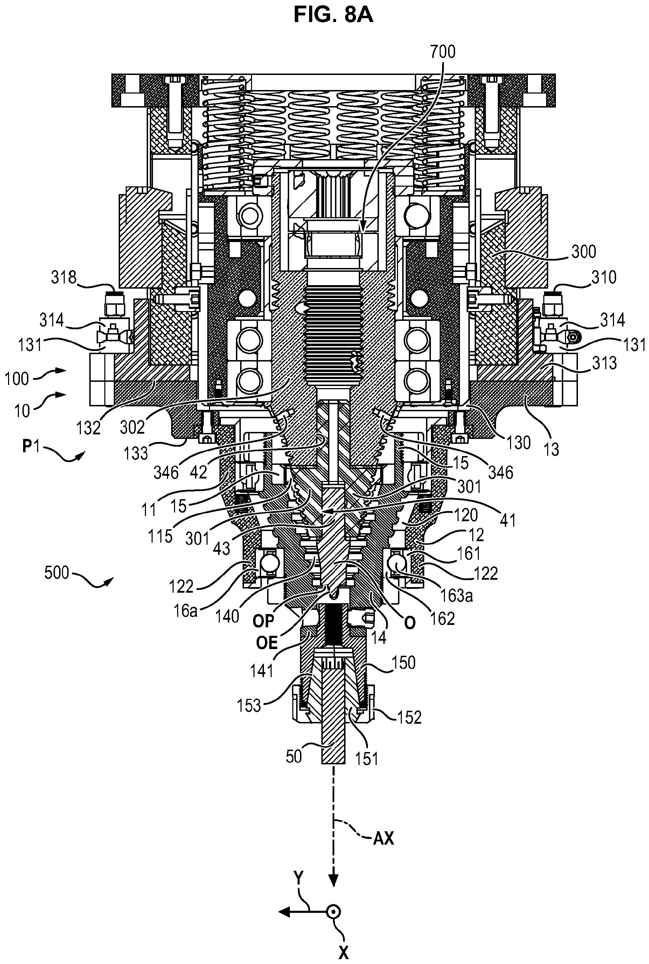

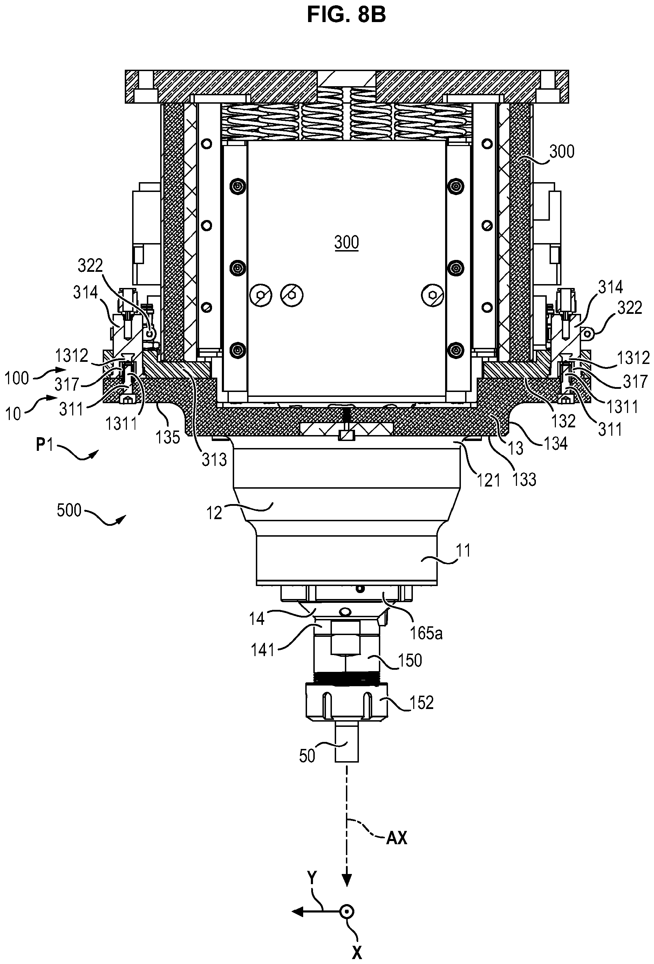

Les pinces actionnables 314 de préhension sont actionnables par un fluide sous pression pour que les pinces 314 se trouvent soit dans une position P1 de saisie des parties 131 de fixation aux figures 8A, 8B, 9, 13, 14 et 15, soit dans une position P2 de relâchement des parties 131 de fixation aux figures 7, 9, 11 et 12. La tête 100 comporte une source 3221 pouvant être commandée pour envoyer ou ne pas envoyer de fluide sous pression aux pinces 314. Le fluide sous pression peut être par exemple de l'air comprimé, les pinces 314 étant à actionneur pneumatique dans ce cas. Les pinces actionnables 314 de préhension permettent d'être commandées rapidement et d'une manière automatisée depuis la tête 100 de soudage, en se dispensant d'un actionneur fixé à l'accessoire 110 d'interface de travail ou aux parties 131 de fixation.

Les pinces actionnables 314 de préhension sont configurées de telle sorte que l'envoi du fluide sous pression aux pinces 314 provoque le passage de la position P1 de saisie des parties 131 de fixation à la position P2 de relâchement des parties 131 de fixation et de telle sorte que l'absence d'envoi du fluide sous pression aux pinces 314 permette le passage de la position P2 de relâchement des parties 131 de fixation à la position P1 de saisie des parties 131 de fixation.

Suivant un mode de réalisation de l'invention, représenté à la figure 7, les pinces actionnables 314 de préhension comportent chacune une entrée 322 d'envoi du fluide sous pression. Les entrées 322 d'envoi du fluide sous pression sont reliées à une canalisation commune 3220 d'envoi du fluide sous pression. La source 3221 de fluide sous pression est raccordée à la canalisation commune 3220. La canalisation commune 3220 est prévue à l'extérieur du bâti 300, au-dessus de la deuxième platine 313.

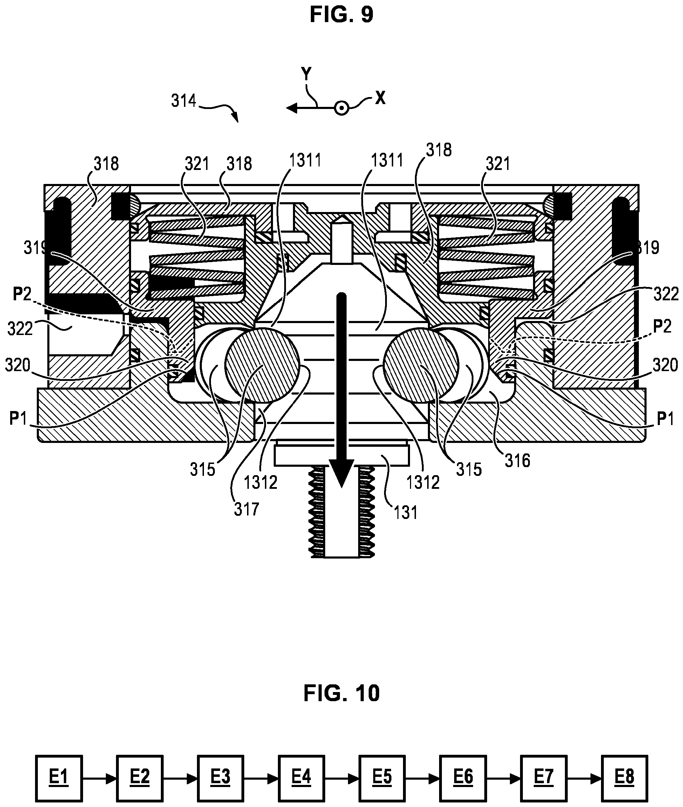

Suivant un mode de réalisation de l'invention, représenté à la figure 9, chaque pince actionnable 314 de préhension est du type module de serrage à billes 315 contraintes par un ressort 321 contre l'évidement 1312 de préhension de la tirette 1311 dans la position P1 de saisie de la partie 131 de fixation. La pince actionnable 314 de préhension comporte un boîtier 318 comportant un conduit 316 dans lequel des deuxièmes billes 315 sont mobiles et un trou 317 permettant de recevoir la tirette 1311 dans le boîtier 318. Le conduit 316 communique avec le trou 317. Chaque pince actionnable 314 de préhension comporte un piston 319 monté coulissant dans le boîtier 318 et un ressort 321 comprimé entre le boîtier 318 et le piston 319. Le piston peut être par exemple coulissant verticalement. Le piston 319 est solidaire d'une patte extérieure 320 située dans le conduit 316. La patte extérieure 320 peut être en oblique par rapport à la direction 323 du conduit 316 allant vers le trou 317, pour que le déplacement du piston 319 transversalement à cette direction du conduit 316 soit converti en un déplacement des deuxièmes billes 315. La patte extérieure 320 est configurée pour pousser les deuxièmes billes 315 dans le trou 317 sous la force de précontrainte exercée par le ressort 321 sur le piston 319 pour que les deuxièmes billes 315 soient en saillie dans le trou 317 et soient bloquées contre l'évidement latéral 1312 de préhension de la tirette 1311, ce qui représente la position P1 de saisie de la partie 131 de fixation, lorsque la partie 131 de fixation a été introduite dans le trou 317. Chaque pince actionnable 314 de préhension comporte une entrée 322 d'envoi du fluide sous pression contre le piston 319 à l'encontre du ressort 321. Ce fluide sous pression peut être par exemple de l'air comprimé. L'envoi du fluide sous pression dans l'entrée 322 déplace le piston 319 à l'encontre du ressort 321 pour éloigner la patte extérieure 320 par rapport aux deuxièmes billes 315, ce qui permet aux deuxièmes billes 315 de s'éloigner du trou 317 et de passer ainsi dans la position P2 de relâchement de la partie 131 de fixation.

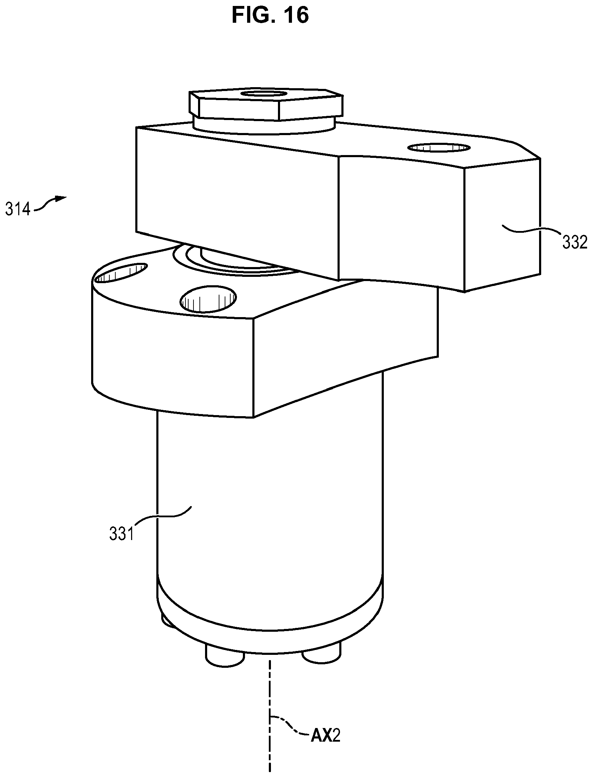

Suivant un autre mode de réalisation de l'invention, représenté à la figure 16, chaque pince actionnable 314 de préhension est du type vérin rotatif, comportant un boîtier 331 contenant un moteur, qui est rotatif autour d'un axe AX2 parallèle à l'axe AX et qui est apte à entraîner en rotation un bec 332, qui fait saillie au-dessus et sur le côté du boîtier 331.

La deuxième platine 313 de la tête 100 porte les pinces actionnables 314 de la figure 16 tournées vers le bas. Les pinces actionnables 314 de la figure 16 permettent aux becs 332 se trouvant dans une certaine position de rotation de venir sous les parties de fixation de l'accessoire 10, formées par les bords de la platine 13, pour la saisir dans la position P1 de saisie de celle-ci. Les pinces actionnables 314 de la figure 16 permettent d'écarter les becs 332 par rapport aux parties de fixation de la tête 100, formées par les bords de la platine 13, pour être dans la position de relâchement de l'accessoire 10.

### Berceau 400 de pose de l'accessoire 10

Un mode de réalisation de l'invention concerne un berceau 400, qui est séparé de l'accessoire 10 d'interface de travail et qui sert à poser dessus l'accessoire 10 d'interface de travail depuis la tête 100 de soudage dans une position de rangement sur le berceau 400, et à prélever de celui-ci l'accessoire 10 d'interface de travail par la tête 100 de soudage. Le berceau 400 est décrit ci-dessous en référence aux figures 7, 12, 13 et 14.

Le berceau 400 comporte un support supérieur 411. Le berceau 400 comporte des éléments 401, 402, 403, 404 de soutien souple ou rigide, par exemple sous la forme de pieds 401, 402, 403, 404, qui sont fixés sous le support supérieur 411 pour maintenir le support supérieur 411 à une hauteur déterminée au-dessus d'une extrémité inférieure 405 des éléments 401, 402, 403, 404 de soutien.

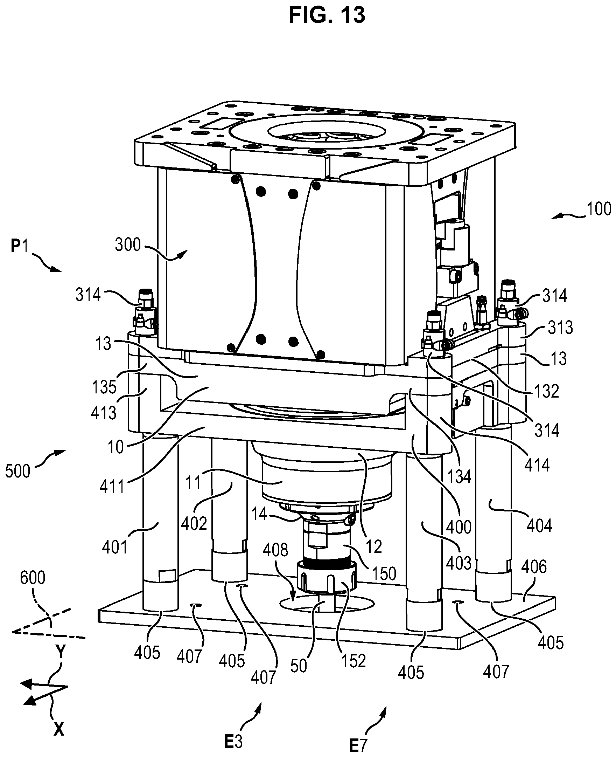

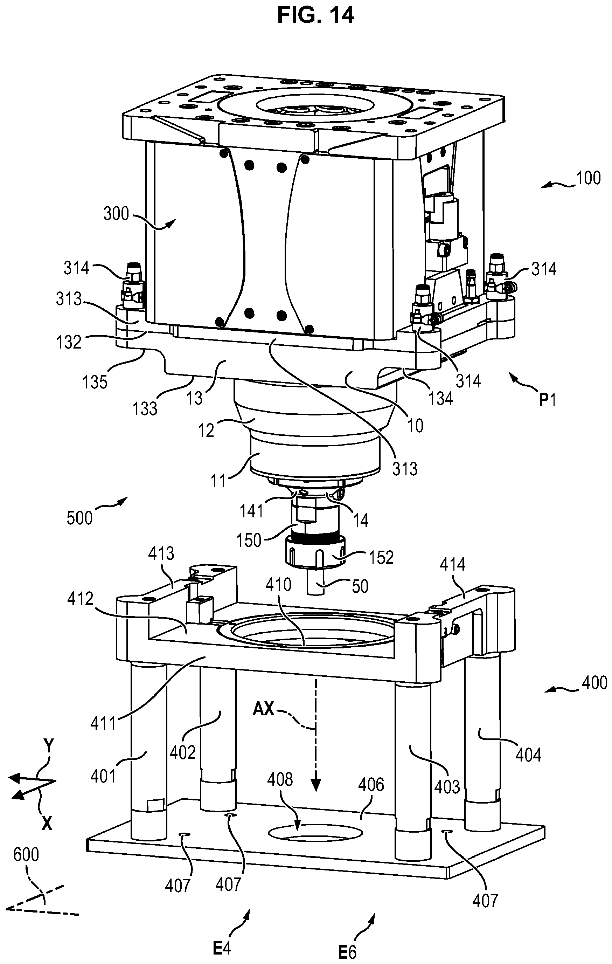

Le support supérieur 411 comporte une deuxième ouverture 410 plus large transversalement que le corps extérieur 11 de l'accessoire 10 d'interface de travail et moins large transversalement que la platine supérieure 13. La deuxième ouverture 410 est tournée vers le haut et est traversée par le corps extérieur 11 et située entre les éléments 401, 402, 403, 404 de soutien dans la position de rangement de l'accessoire 10 d'interface de travail sur le support supérieur 411. L'accessoire 10 d'interface de travail est ainsi accessible par le haut pour pouvoir être prélevé par la tête 10 de soudage à l'étape E4 de la figure 14. Le berceau 400 assure ainsi une orientation prescrite et reproductible de l'accessoire 10 d'interface de travail pour la tête 100 de soudage dans la position de rangement, c'est-à-dire aussi bien dans les étapes E3, E4 de prélèvement de l'accessoire 10 par la tête 100 aux figures 13 et 14 que dans l'étape E7 de repose de l'accessoire 10 sur le berceau 400 à la figure 13.

Le support supérieur 411 peut comporter des butées latérales saillantes 413 et 414 vers le haut, éloignées l'une de l'autre suivant la direction Y, par exemple à deux extrémités du support supérieur 411. Le support supérieur 411 est configuré pour soutenir par les butées latérales saillantes 413 et 414 la platine supérieure 13 de l'accessoire 10 d'interface de travail. On obtient ainsi un positionnement précis et reproductible de l'accessoire 10 sur le support 411 dans la position de rangement.

La platine supérieure 13 de l'accessoire 10 d'interface de travail peut également comporter une surface inférieure 133 plane, centrale et par exemple horizontale, qui remonte sur deux rebords latéraux 134 et 135 éloignés l'un de l'autre suivant la direction Y. Les deux rebords latéraux 134 et 135 sont appuyés sur respectivement les deux butées latérales saillantes 413 et 414 dans la position de rangement. Le support 411 comporte entre et sous les deux butées latérales saillantes 413 et 414 une surface supérieure plane 412 dans laquelle se trouve l'ouverture 410. Dans la position de rangement, la surface inférieure 133 de la platine 13 est au-dessus de la surface supérieure plane 412. On diminue ainsi les frottements entre la platine 13 et le support 411.

Suivant un mode de réalisation de l'invention, le berceau 400 comporte une plaque inférieure 406 de montage, fixée à l'extrémité inférieure 405 des éléments 401, 402, 403, 404 de soutien et disposée sous l'ouverture 410. La plaque inférieure 406 de montage permet de fixer (par exemple par des boulonnages ou des vissages traversant des trous 407 de la plaque 406) le berceau 400 à la table 600 de travail. La plaque inférieure 406 de montage peut comporter une ouverture inférieure 408c permettant de laisser traverser l'outil 50 de travail ou le support 150 dans la position de rangement.

Les éléments 401, 402, 403, 404 de soutien peuvent être en un élastomère, comme par exemple en caoutchouc. Cela permet d'amortir les chocs provoqués par la tête 100.

Le berceau 400 et l'accessoire 10 d'interface de travail peuvent faire partie du kit 500 de travail.

L'outil 50 de travail, le support 150 de l'outil 50 de travail, ou l'outil 50 d'usinage ou l'outil 50 de fraisage le kit 100 de travail peuvent également faire partie du kit 500 de travail.

Suivant un mode de réalisation de l'invention représenté à la figure 7, le support supérieur 411 du berceau 400 comporte un premier capteur 441 de présence de la platine supérieure 13 de l'accessoire 10 d'interface de travail.

Suivant un mode de réalisation de l'invention représenté à la figure 7, la deuxième platine 313 de la tête 100 de soudage par friction-malaxage comporte un deuxième capteur 341 de présence de la platine supérieure 13 de l'accessoire 10 d'interface de travail, par exemple pour détecter une partie déterminée 341b prévue sur la platine supérieure 13 de l'accessoire 10 d'interface de travail, cette partie déterminée 341b se trouvant en face et à proximité du deuxième capteur 341 dans la position de rangement.

Les signaux de détection de présence ou d'absence de la platine supérieure 13 de l'accessoire 10 d'interface de travail, produites par le premier capteur 441 et par le deuxième capteur 341 peuvent être envoyées à une unité de commande ou à un automate de contrôle de la tête 100, lequel peut déterminer à quelle étape parmi les étapes E1 à E8 décrites ci-dessous se trouve la tête 100, en fonction de la combinaison de ces signaux de détection.

### Procédé de soudage de pièces

L'invention concerne également un procédé de soudage des pièces P10 et P20 à l'aide du kit 100 de travail décrit ci-dessus. Ce procédé de soudage comporte les étapes E1 à E8 qui sont décrites ci-dessous en référence aux figures 10 à 15.

Au cours d'une première étape E1 à la figure 11, on soude les pièces P10 et P20 fixées sur la table 600 selon la ligne L de soudure à l'aide de la tête 100 de soudage par friction-malaxage. La tête 100 fait tourner le pion saillant OE fixé à la partie rotative 301, 302 inférieure autour de l'axe AX de rotation contre les pièces P10 et P20. La tête 100 de soudage par friction-malaxage et la table 600 sont déplacés l'une par rapport à l'autre selon la ligne LJ de joint entre les pièces P10 et P20.

D'une manière générale, la tête 100 peut être commandée par une machine à commande numérique pour déplacer automatiquement la tête 100 et la table 600 suivant une trajectoire programmée et préenregistrée l'une par rapport à l'autre. Par exemple, la machine à commande numérique est configurée pour déplacer la tête 100 dans la direction axiale AX et pour déplacer la table 600 dans les deux directions transversales X et Y, transversales à la direction axiale AX.

Puis, au cours de la deuxième étape E2 à la figure 12, la machine à commande numérique déplace la tête 100 de soudage et la table 600 l'une par rapport à l'autre pour amener la tête 100 de soudage au-dessus du premier logement 120 de l'accessoire 10 d'interface de travail. Cet accessoire 10 d'interface de travail a, avant la deuxième étape E2, été disposé dans la position de rangement sur le support supérieur 411 du berceau 400 ayant été fixé sur la table 600. L'outil 50 de travail ou le support de l'outil 150 de travail a, avant la deuxième étape E2, été fixé sous la deuxième partie inférieure 141 de l'arbre central 14 de l'accessoire 10 d'interface de travail.

Puis, au cours de la troisième étape E3 à la figure 13, la machine à commande numérique déplace la tête 100 de soudage et la table 600 l'une par rapport à l'autre pour introduire la tête 100 de soudage dans le deuxième logement 140 de l'arbre central 14 de l'accessoire 10 d'interface de travail. La tête 100 introduit la couronne 115 extérieurement dentée de la partie rotative 301, 302 de la tête 100 de soudage dans le manchon 15 intérieurement denté d'accouplement de l'arbre central 14 de l'accessoire 10 pour faire engrener la couronne 115 avec le manchon 15. La machine à commande numérique ou un système d'automatisation indépendant actionne les pinces actionnables 314 de la tête 100 de soudage pour saisir les parties 131 de fixation de l'accessoire 10.

Puis, au cours de la quatrième étape E4 à la figure 14, la machine à commande numérique déplace la tête 100 de soudage et la table 600 l'une par rapport à l'autre pour déplacer la tête 100 de soudage pour soulever l'accessoire 10 d'interface de travail au-dessus du berceau 400.

Puis, au cours de la cinquième étape E5 à la figure 15, la machine à commande numérique déplace la tête 100 de soudage et la table 600 l'une par rapport à l'autre pour amener l'outil 50 de travail contre la ligne L de soudure des pièces P10 et P20 et fait tourner autour de l'axe AX de rotation la partie rotative 301, 302 inférieure de la tête 100 de soudage. La machine à commande numérique déplace la tête 100 de soudage et la table 600 l'une par rapport à l'autre pour guider l'outil 50 de travail le long de la ligne L de soudure pendant que cet outil 50 de travail tourne autour de l'axe AX. Cela permet à l'outil 50 de travail, qui est par exemple un outil de fraisage, d'enlever les aspérités DF collatérales de la ligne L de soudure ou de réaliser tout autre opération d'enlèvement de matière.

On décrit ci-dessous une opération de remisage de l'accessoire 10 d'interface de travail sur le berceau 400, en référence aux figures 10 et 12 à 15, pouvant avoir lieu après l'étape E5 au cours du procédé.

A la figure 14, au cours de la sixième étape E6 postérieure à la cinquième étape E5, la machine à commande numérique déplace la tête 100 de soudage et la table 600 l'une par rapport à l'autre pour éloigner l'outil 50 de travail par rapport à la ligne L de soudure des pièces P10 et P20, amène l'accessoire 10 d'interface de travail au-dessus du berceau 400 et arrête la rotation de la partie rotative 301, 302 inférieure de la tête 100 de soudage.

Puis, au cours de la septième étape E7 à la figure 13, la machine à commande numérique déplace la tête 100 de soudage et la table 600 l'une par rapport à l'autre pour disposer l'accessoire 10 d'interface de travail sur le support supérieur 411 du berceau 400.

Puis, au cours d'une huitième étape E8 à la figure 12, la machine à commande numérique actionne les pinces actionnables 314 de la tête 100 de soudage pour relâcher les parties 131 de fixation de l'accessoire 10 d'interface de travail qui passe alors dans la position de rangement sur le berceau 400. Puis, la machine à commande numérique déplace la tête 100 de soudage et la table 600 l'une par rapport à l'autre pour sortir la tête 100 de soudage hors de l'accessoire 10 d'interface de travail.

## Revendications

1. Kit (500) de travail, comportant un accessoire (10) d'interface de travail et une tête (100) de soudage par friction-malaxage,
l'accessoire (10) d'interface de travail étant destiné à être monté sur la tête (100) de soudage par friction-malaxage et étant apte à être démonté par rapport à la tête (100) de soudage par friction-malaxage,
l'accessoire (10) d'interface de travail comportant un corps extérieur (11) ayant une première paroi latérale (12) délimitant un premier logement (120) ouvert sur le dessus pour l'introduction d'une partie rotative (301, 302) de la tête (100) de soudage par friction-malaxage et la sortie de la tête (100) de soudage par friction-malaxage,
l'accessoire (10) d'interface de travail comportant une platine supérieure (13), qui est fixée sur une partie supérieure (121) de la première paroi latérale (12) ou qui est d'une seule pièce avec la partie supérieure (121) de la première paroi latérale (12), qui a une première ouverture supérieure (130) raccordée au premier logement (120) et qui comporte des parties (131) de fixation, permettant la fixation amovible contre la tête (100) de soudage par friction-malaxage,
l'accessoire (10) d'interface de travail comportant un arbre central (14), qui est monté d'une manière rotative dans la première paroi latérale (12) autour d'un axe (AX) de rotation,
l'arbre central (14) ayant une deuxième partie inférieure (141), qui dépasse d'une première partie inférieure (122) de la première paroi latérale (12) vers le bas et qui est destiné à porter un outil (50) de travail,
l'arbre central (14) comportant dans le premier logement (120) un manchon (15) intérieurement denté d'accouplement pour permettre l'entraînement en rotation de l'arbre central (14), lorsqu'une couronne (115) extérieurement dentée de la partie rotative (301, 302) de la tête (100) est introduite dans le manchon (15) et tourne dans le manchon (15) intérieurement denté d'accouplement autour de l'axe (AX) de rotation,
la tête (100) de soudage par friction-malaxage comportant un bâti (300) et la partie rotative (301, 302) inférieure, montée d'une manière rotative par rapport au bâti (300) et dépassant de celui-ci vers le bas, avec la partie rotative (301, 302) de la tête (100) comportant la couronne (115) extérieurement dentée pour permettre l'entraînement en rotation du manchon (15) intérieurement denté d'accouplement,
le bâti (300) comportant une deuxième platine (313) d'appui contre la platine supérieure (13),
la deuxième platine (313) comportant un mécanisme de préhension comportant un système de pinces (314) de serrage, qui est tourné vers le bas et qui est destiné à être fixé sur les parties de fixation (131, 13) de la platine supérieure (13) de l'accessoire (10),
les pinces (314) étant actionnables par un fluide sous pression pour être soit dans une position (P1) de saisie des parties (131) de fixation, soit dans une position (P2) de relâchement des parties (131) de fixation,
la tête (100) comportant une source (3221) pouvant être commandée pour envoyer ou ne pas envoyer de fluide sous pression aux pinces (314),
les pinces (314) étant configurées de telle sorte que l'envoi du fluide sous pression aux pinces (314) provoque le passage de la position (P1) de saisie des parties (131) de fixation à la position (P2) de relâchement des parties (131) de fixation et de telle sorte que l'absence d'envoi du fluide sous pression aux pinces (314) permette le passage de la position (P2) de relâchement des parties (131) de fixation à la position (P1) de saisie des parties (131) de fixation.

2. Kit de travail suivant la revendication 1, **caractérisé en ce que** les pinces (314) comportent chacune une entrée (322) d'envoi du fluide sous pression, les entrées (322) d'envoi du fluide sous pression sont reliées à une canalisation commune (3220) d'envoi du fluide sous pression,
la source (3221) de fluide sous pression est raccordée à la canalisation commune (3220),
la canalisation commune (3220) est prévue à l'extérieur du bâti (300), au-dessus de la deuxième platine (313).

3. Kit de travail suivant la revendication 2, **caractérisé en ce que** les parties de fixation (131, 13) de la platine supérieure (13) de l'accessoire (10) comportent chacune une tirette (1311), qui est tournée vers le haut et qui est fixée à la platine supérieure (13).

4. Kit de travail suivant l'une quelconque des revendications 1 à 3, **caractérisé en ce que** la deuxième platine (313) de la tête (100) de soudage par friction-malaxage comporte un deuxième capteur (341) de présence de la platine supérieure (13) de l'accessoire (10) d'interface de travail.

5. Kit (500) de travail suivant l'une quelconque des revendications 1 à 4, **caractérisé en ce que** le kit (500) de travail comporte en outre un berceau (400), séparé de l'accessoire (10) d'interface de travail,
le berceau (400) comportant un support supérieur (411) et des éléments (401, 402, 403, 404) de soutien fixés sous le support supérieur (411) pour maintenir le support supérieur (411) à une hauteur déterminée au-dessus d'une extrémité inférieure (405) des éléments (401, 402, 403, 404) de soutien,
le support supérieur (411) étant apte à soutenir la platine supérieure (13) de l'accessoire (10) d'interface de travail,
le support supérieur (411) comportant une deuxième ouverture (410) tournée vers le haut pour la traversée du corps extérieur (11) de l'accessoire (10) d'interface de travail entre les éléments (401, 402, 403, 404) de soutien, lorsque l'accessoire (10) d'interface de travail est disposé dans une position de rangement sur le support supérieur (411).

6. Kit de travail suivant la revendication 5, **caractérisé en ce que** le berceau (400) comporte une plaque inférieure (406) de montage, fixée à l'extrémité inférieure (405) des éléments (401, 402, 403, 404) de soutien.

7. Kit de travail suivant la revendication 5 ou 6, **caractérisé en ce que** le support supérieur (411) comporte un premier capteur (441) de présence de la platine supérieure (13) de l'accessoire (10) d'interface de travail.

8. Kit de travail suivant l'une quelconque des revendications 1 à 10, **caractérisé en ce que** le kit (100) de travail comporte en outre comme outil (50) de travail un outil d'usinage ou un outil de fraisage.

9. Kit de travail suivant l'une quelconque des revendications précédentes, **caractérisé en ce qu'**au moins un palier (16a, 16b) de support de rotation de l'arbre central (14) autour de l'axe (AX) de rotation est disposé entre l'arbre central (14) et la première paroi latérale (12).

10. Kit de travail suivant la revendication 9, **caractérisé en ce que** le palier (16a, 16b) de support de rotation de l'arbre central (14) est un montage de roulement (16a, 16b), comportant au moins un premier guide (161a, 161b) de roulement fixé à la première paroi latérale (12), au moins un deuxième guide (162a, 162b) de roulement, qui est fixé à l'arbre central (14) et qui est rotatif par rapport au premier guide (161a, 161b) de roulement.

11. Kit de travail suivant l'une quelconque des revendications précédentes, **caractérisé en ce que** l'arbre central (14) comporte une deuxième paroi latérale (142) délimitant un deuxième logement (140) ouvert sur le dessus pour l'introduction de la partie rotative (301, 302) de la tête (100), le deuxième logement (140) étant compris dans le premier logement (120), le manchon (15) intérieurement denté d'accouplement étant fixé à la deuxième paroi latérale (142) ou étant d'une seule pièce avec la deuxième paroi latérale (142) et prolongeant le deuxième logement (140).

12. Kit de travail suivant la revendication 11, **caractérisé en ce que** la deuxième paroi latérale (142) a une largeur horizontale diminuant entre le manchon (15) intérieurement denté d'accouplement et la deuxième partie inférieure (141) de l'arbre central (14).

13. Kit de travail suivant la revendication 11 ou 12, **caractérisé en ce que** la deuxième paroi latérale (142) comporte des rainures intérieures (143) et/ou des rainures extérieures (144).

14. Kit de travail suivant la revendication 13, **caractérisé en ce que** les rainures intérieures (143) et/ou les rainures extérieures (144) sont transversales à l'axe (AX) de rotation.

15. Kit de travail suivant l'une quelconque des revendications précédentes, **caractérisé en ce que** la deuxième partie inférieure (141) de l'arbre central (14) comporte un évidement inférieur central (145), dans lequel est destiné à être fixé l'outil (50) de travail ou un support (150) de l'outil (50) de travail.

16. Kit de travail suivant la revendication 15, **caractérisé en ce que** la deuxième partie inférieure (141) de l'arbre central (14) comporte, en plus de l'évidement inférieur central (145), au moins un canal (146) de traversée entre le deuxième logement (140) et une surface extérieure (147) de la deuxième partie inférieure (141).

17. Procédé de soudage de pièces à l'aide du kit (100) de travail suivant l'une quelconque des revendications 5 à 16, lorsqu'elles dépendent au moins de l'une des revendications 5 à 7, **caractérisé en ce que**
au cours d'une première étape (E1), on soude les pièces fixées sur une table (600) selon une trajectoire de soudure à l'aide de la tête (100) de soudage par friction-malaxage, dont un pion fixé à la partie rotative (301, 302) inférieure est mis en rotation autour de l'axe (AX) de rotation contre les pièces, la tête (100) de soudage par friction-malaxage et la table (600) étant déplacés l'une par rapport à l'autre selon la trajectoire (L) de soudure, pour réaliser une ligne de soudure,
au cours d'une deuxième étape (E2) postérieure à la première étape (E1), on déplace la tête (100) de soudage et la table (600) l'une par rapport à l'autre pour amener la tête (100) de soudage au-dessus du premier logement (120) de l'accessoire (10) d'interface de travail, ayant été disposé sur le support supérieur (411) du berceau (400) ayant été fixé sur la table (600), un outil (50) de travail ou support de l'outil (150) de travail ayant été fixé sous la deuxième partie inférieure (141) de l'arbre central (14) de l'accessoire (10) d'interface de travail,
au cours d'une troisième étape (E3) postérieure à la deuxième étape (E2), on déplace la tête (100) de soudage et la table (600) l'une par rapport à l'autre pour introduire la tête (100) de soudage dans un deuxième logement (140) de l'arbre central (14) de l'accessoire (10) d'interface de travail, de manière à faire engrener la couronne (115) extérieurement dentée de la partie rotative (301, 302) de la tête (100) de soudage dans le manchon (15) intérieurement denté d'accouplement de l'arbre central (14) de l'accessoire (10) d'interface de travail, et on actionne les pinces (314) de la tête (100) de soudage pour saisir les parties (131) de fixation de l'accessoire (10) d'interface de travail,
au cours d'une quatrième étape (E4) postérieure à la troisième étape (E3), on déplace la tête (100) de soudage et la table (600) l'une par rapport à l'autre pour déplacer la tête (100) de soudage pour soulever l'accessoire (10) d'interface de travail au-dessus du berceau (400),
au cours d'une cinquième étape (E5) postérieure à la quatrième étape (E4), on déplace la tête (100) de soudage et la table (600) l'une par rapport à l'autre pour amener l'outil (50) de travail contre la ligne de soudure des pièces en faisant tourner autour de l'axe (AX) de rotation la partie rotative (301, 302) inférieure de la tête (100) de soudage, la tête (100) de soudage par friction-malaxage et la table (600) étant déplacés l'une par rapport à l'autre selon la trajectoire (L) de soudure.

18. Procédé de soudage de pièces suivant la revendication 17, **caractérisé en ce que**
au cours d'une sixième étape (E6) postérieure à la cinquième étape (E5), on déplace la tête (100) de soudage et la table (600) l'une par rapport à l'autre pour éloigner l'outil (50) de travail par rapport à la ligne de soudure des pièces et amener l'accessoire (10) d'interface de travail au-dessus du berceau (400), on arrête la rotation de la partie rotative (301, 302) inférieure de la tête (100) de soudage,
au cours d'une septième étape (E7) postérieure à la sixième étape (E6), on déplace la tête (100) de soudage et la table (600) l'une par rapport à l'autre pour disposer l'accessoire (10) d'interface de travail sur le support supérieur (411) du berceau (400),
au cours d'une huitième étape (E8) postérieure à la septième étape (E7), on actionne les pinces (314) de la tête (100) de soudage pour relâcher les parties (131) de fixation de l'accessoire (10) d'interface de travail, puis on déplace la tête (100) de soudage et la table (600) l'une par rapport à l'autre pour sortir la tête (100) de soudage hors de l'accessoire (10) d'interface de travail.

## Patentansprüche

1. Arbeitskit (500), aufweisend ein Arbeitsschnittstellenzubehör (10) und einen Reibrührschweißkopf (100),
wobei das Arbeitsschnittstellenzubehör (10) dazu bestimmt ist, an dem Reibrührschweißkopf (100) angebracht zu sein und imstande ist, in Bezug auf den Reibrührschweißkopf (100) abnehmbar zu sein,
wobei das Arbeitsschnittstellenzubehör (10) einen Außenkörper (11) mit einer ersten Seitenwand (12) aufweist, die eine erste, nach oben offene Aufnahme (120) zum Einführen eines drehbaren Teils (301, 302) des Reibrührschweißkopfs (100) und zum Herausnehmen des Reibrührschweißkopfs (100) begrenzt,
wobei das Arbeitsschnittstellenzubehör (10) eine obere Platte (13) aufweist, die an einem oberen Abschnitt (121) der ersten Seitenwand (12) befestigt ist oder die einstückig mit dem oberen Abschnitt (121) der ersten Seitenwand (12) ist, die eine erste obere Öffnung (130) aufweist, die mit der ersten Aufnahme (120) verbunden ist und die Befestigungsabschnitte (131) aufweist, die die lösbare Befestigung am Reibrührschweißkopf (100) gestatten,
wobei das Arbeitsschnittstellenzubehör (10) eine zentrale Welle (14) aufweist, die in der ersten Seitenwand (12) um eine Drehachse (AX) drehbar angebracht ist,
wobei die zentrale Welle (14) einen zweiten unteren Abschnitt (141) aufweist, der von einem ersten unteren Abschnitt (122) der ersten Seitenwand (12) nach unten vorsteht und der dazu bestimmt ist, ein Arbeitswerkzeug (50) zu tragen,
wobei die zentrale Welle (14) in der ersten Aufnahme (120) eine innengezahnte Kupplungshülse (15) aufweist, um den Drehantrieb der zentralen Welle (14) zu gestatten, wenn ein außenverzahnter Kranz (115) des drehbaren Teils (301, 302) des Kopfs (100) in die Hülse (15) eingeführt wird und sich in der innengezahnten Kupplungshülse (15) um die Drehachse (AX) dreht,
wobei der Reibrührschweißkopf (100) ein Gestell (300) und den unteren drehbaren Abschnitt (301, 302) aufweist, der in Bezug auf das Gestell (300) drehbar angebracht ist und von diesem nach unten vorsteht, mit dem drehbaren Abschnitt (301, 302) des Kopfs (100), der den außenverzahnten Kranz (115) aufweist, um den Drehantrieb der innengezahnten Kupplungshülse (15) zu gestatten,
wobei das Gestell (300) eine zweite Platte (313) in Abstützung an der oberen Platte (13) aufweist,
wobei die zweite Platte (313) einen Greifmechanismus mit einem Klemmzangensystem (314) aufweist, das nach unten gerichtet und dazu bestimmt ist, an den Befestigungsabschnitten (131, 13) der oberen Platte (13) des Zubehörs (10) befestigt zu sein,
wobei die Zangen (314) durch ein Druckfluid betätigbar sind, um entweder in einer Greifposition (P1) der Befestigungsabschnitte (131) oder in einer Loslassposition (P2) der Befestigungsabschnitte (131) zu sein,
wobei der Kopf (100) eine Quelle (3221) aufweist, die steuerbar ist, um Druckfluid zu den Zangen (314) zu schicken oder nicht zu schicken,
wobei die Zangen (324) derart ausgelegt sind, dass das Schicken des Druckfluids an die Zangen (314) den Wechsel aus der Greifposition (P1) der Befestigungsabschnitte (131) in die Loslassposition (P2) der Befestigungsabschnitte (131) derart bewirkt und dass das Nicht-Schicken des Druckfluids an die Zangen (314) den Wechsel aus der Loslassposition (P2) der Befestigungsabschnitte (131) in die Greifposition (P1) der Befestigungsabschnitte (131) gestattet.

2. Arbeitskit nach Anspruch 1, **dadurch gekennzeichnet, dass** die Zangen (314) jeweils einen Druckfluidzufuhreinlass (322) aufweisen, wobei die Druckfluidzufuhreinlässe (322) mit einer gemeinsamen Druckfluidzufuhrkanalisation (3220) verbunden sind,
wobei die Druckfluidquelle (3221) an die gemeinsame Kanalisation (3220) angeschlossen ist,
wobei die gemeinsame Kanalisation (3220) außerhalb des Gestells (300) oberhalb der zweiten Platte (313) vorgesehen ist.

3. Arbeitskit nach Anspruch 2, **dadurch gekennzeichnet, dass** die Befestigungsabschnitte (131, 13) der oberen Platte (13) des Zubehörs (10) jeweils einen Greifzug (1311) aufweisen, der nach oben gerichtet ist und der an der oberen Platte (13) befestigt ist.

4. Arbeitskit nach einem der Ansprüche 1 bis 3, **dadurch gekennzeichnet, dass** die zweite Platte (313) des Reibrührschweißkopfs (100) einen zweiten Sensor (341) für die Anwesenheit der oberen Platte (13) des Arbeitsschnittstellenzubehörs (10) aufweist.

5. Arbeitskit (500) nach einem der Ansprüche 1 bis 4, **dadurch gekennzeichnet, dass** das Arbeitskit (500) ferner ein von dem Arbeitsschnittstellenzubehör (10) getrenntes Gerüst (400) aufweist,
wobei das Gerüst (400) eine obere Abstützung (411) und Stützelemente (401, 402, 403, 404) aufweist, die unter der oberen Abstützung (411) befestigt sind, um die obere Abstützung (411) in einer bestimmten Höhe über einem unteren Ende (405) der Stützelemente (401, 402, 403, 404) zu halten,
wobei die obere Abstützung (411) imstande ist, die obere Platte (13) des Arbeitsschnittstellenzubehörs (10) abzustützen,
wobei die obere Abstützung (411) eine zweite, nach oben gerichtete Öffnung (410) zum Durchführen des Außenkörpers (11) des Arbeitsschnittstellenzubehörs (10) zwischen den Stützelementen (401, 402, 403, 404) aufweist, wenn das Arbeitsschnittstellenzubehör (10) in einer Aufbewahrungsposition auf der oberen Abstützung (411) angeordnet ist.

6. Arbeitskit nach Anspruch 5, **dadurch gekennzeichnet, dass** das Gerüst (400) eine untere Montageplatte (406) aufweist, die an dem unteren Ende (405) der Stützelemente (401, 402, 403, 404) befestigt ist.

7. Arbeitskit nach Ansprüche 5 oder 6, **dadurch gekennzeichnet, dass** die obere Abstützung (411) einen ersten Sensor (441) für die Anwesenheit der oberen Platte (13) des Arbeitsschnittstellenzubehörs (10) aufweist.

8. Arbeitskit nach einem der Ansprüche 1 bis 10, **dadurch gekennzeichnet, dass** das Arbeitskit (100) ferner als Arbeitswerkzeug (50) ein Bearbeitungswerkzeug oder ein Fräswerkzeug aufweist.

9. Arbeitskit nach einem der vorhergehenden Ansprüche, **dadurch gekennzeichnet, dass** mindestens ein Rotationsstützlager (16a, 16b) der zentralen Welle (14) um die Drehachse (AX) zwischen der zentralen Welle (14) und der ersten Seitenwand (12) angeordnet ist.

10. Arbeitskit nach Anspruch 9, **dadurch gekennzeichnet, dass** das Rotationsstützlager (16a, 16b) der zentralen Welle (14) eine Wälzlagermontage (16a, 16b) ist, die mindestens eine erste Wälzlagerführung (161a, 161b) aufweist, die an der ersten Seitenwand (12) befestigt ist, mindestens eine zweite Wälzlagerführung (162a, 162b), die an der zentralen Welle (14) befestigt ist und die in Bezug auf die erste Wälzlagerführung (161a, 161b) drehbar ist.

11. Arbeitskit nach einem der vorhergehenden Ansprüche, **dadurch gekennzeichnet, dass** die zentrale Welle (14) eine zweite Seitenwand (142) aufweist, die eine zweite, nach oben offene Aufnahme (140) zum Einführen des drehbaren Teils (301, 302) des Kopfs (100) begrenzt, wobei die zweite Aufnahme (140) in der ersten Aufnahme (120) enthalten ist, wobei die innengezahnte Kupplungshülse (15) an der zweiten Seitenwand (142) befestigt ist oder einstückig mit der zweiten Seitenwand (142) ist und die zweite Aufnahme (140) verlängert.

12. Arbeitskit nach Anspruch 11, **dadurch gekennzeichnet, dass** die zweite Seitenwand (142) eine horizontale Breite aufweist, die zwischen der innengezahnten Kupplungshülse (15) und dem zweiten unteren Abschnitt (141) der zentralen Welle (14) abnimmt.

13. Arbeitskit nach Anspruch 11 oder 12, **dadurch gekennzeichnet, dass** die zweite Seitenwand (142) innere Nuten (143) und/oder äußere Nuten (144) aufweist.

14. Arbeitskit nach Anspruch 13, **dadurch gekennzeichnet, dass** die inneren Nuten (143) und/oder die äußeren Nuten (144) quer zur Drehachse (AX) verlaufen.

15. Arbeitskit nach einem der vorhergehenden Ansprüche, **dadurch gekennzeichnet, dass** der zweite untere Abschnitt (141) der zentralen Welle (14) eine zentrale untere Aussparung (145) aufweist, in der das Arbeitswerkzeug (50) oder ein Halter (150) für das Arbeitswerkzeug (50) befestigt zu sein bestimmt ist.

16. Arbeitskit nach Anspruch 15, **dadurch gekennzeichnet, dass** der zweite untere Abschnitt (141) der zentralen Welle (14) zusätzlich zu der zentralen unteren Aussparung (145) mindestens einen Durchgangskanal (146) zwischen der zweiten Aufnahme (140) und einer Außenfläche (147) des zweiten unteren Abschnitts (141) aufweist.

17. Verfahren zum Schweißen von Werkstücken mit dem Arbeitskit (100) nach einem der Ansprüche 5 bis 16, wenn sie mindestens von einem der Ansprüche 5 bis 7 abhängen, **dadurch gekennzeichnet, dass**
in einem ersten Schritt (E1) die auf einem Tisch (600) befestigten Werkstücke entlang einer Schweißbahn mit Hilfe des Reibrührschweißkopfs (100) verschweißt werden, von dem ein an dem unteren drehbaren Abschnitt (301, 302) befestigter Stift um die Drehachse (AX) gegen die Werkstücke in Drehung versetzt wird, wobei der Reibrührschweißkopf (100) und der Tisch (600) in Bezug zueinander gemäß der Schweißbahn (L) bewegt werden, um eine Schweißnaht zu erzeugen,
in einem zweiten Schritt (E2) nach dem ersten Schritt (E1) der Schweißkopf (100) und der Tisch (600) in Bezug zueinander bewegt werden, um den Schweißkopf (100) über die erste Aufnahme (120) des Arbeitsschnittstellenzubehörs (10) zu führen, das auf der oberen Abstützung (411) des Gerüsts (400) angeordnet wurde, die an dem Tisch (600) befestigt wurde, wobei ein Arbeitswerkzeug (50) oder ein Arbeitswerkzeughalter (150) unter dem zweiten unteren Abschnitt (141) der zentralen Welle (14) des Arbeitsschnittstellenzubehörs (10) befestigt wurde,
in einem dritten Schritt (E3) nach dem zweiten Schritt (E2) der Schweißkopf (100) und der Tisch (600) in Bezug zueinander bewegt werden, um den Schweißkopf (100) in eine zweite Aufnahme (140) der zentralen Welle (14) des Arbeitsschnittstellenzubehörs (10) zu führen, so dass der außengezahnte Kranz (115) des drehbaren Teils (301, 302) des Schweißkopfs (100) in die innengezahnte Kupplungshülse (15) der zentralen Welle (14) des Arbeitsschnittstellenzubehörs (10) eingreift, und die Zangen (314) des Schweißkopfs (100) betätigt werden, um die Befestigungsabschnitte (131) des Arbeitsschnittstellenzubehörs (10) zu ergreifen,
in einem vierten Schritt (E4) nach dem dritten Schritt (E3) der Schweißkopf (100) und der Tisch (600) in Bezug zueinander bewegt werden, um den Schweißkopf (100) zu bewegen, um das Arbeitsschnittstellenzubehör (10) über das Gerüst (400) zu heben,
in einem fünften Schritt (E5) nach dem vierten Schritt (E4) der Schweißkopf (100) und der Tisch (600) in Bezug zueinander bewegt werden, um das Arbeitswerkzeug (50) gegen die Schweißnaht der Werkstücke zu bringen, indem der untere drehbare Abschnitt (301, 302) des Schweißkopfs (100) um die Drehachse (AX) gedreht wird, wobei der Reibrührschweißkopf (100) und der Tisch (600) gemäß der Schweißbahn (L) in Bezug zueinander bewegt werden.

18. Verfahren zum Schweißen von Werkstücken nach Anspruch 17, **dadurch gekennzeichnet, dass**
in einem sechsten Schritt (E6) nach dem fünften Schritt (E5) der Schweißkopf (100) und der Tisch (600) in Bezug zueinander bewegt werden, um das Arbeitswerkzeug (50) von der Schweißnaht der Werkstücke zu entfernen und das Arbeitsschnittstellenzubehör (10) über das Gerüst (400) zu führen, die Drehung des unteren drehbaren Teils (301, 302) des Schweißkopfs (100) gestoppt wird,
in einem siebten Schritt (E7) nach dem sechsten Schritt (E6) der Schweißkopf (100) und der Tisch (600) in Bezug zueinander bewegt werden, um das Arbeitsschnittstellenzubehör (10) über der oberen Abstützung (411) des Gerüsts (400) anzuordnen,
in einem achten Schritt (E8) nach dem siebten Schritt (E7) die Zangen (314) des Schweißkopfs (100) betätigt werden, um die Befestigungsabschnitte (131) des Arbeitsschnittstellenzubehörs (10) zu lösen, und dann der Schweißkopf (100) und der Tisch (600) in Bezug zueinander bewegt werden, um den Schweißkopf (100) aus dem Arbeitsschnittstellenzubehör (10) zu entfernen.

## Claims

1. A work kit, comprising a work interface accessory (10) and a friction stir welding head (100),
wherein the work interface accessory (10) is intended to be assembled on the friction stir welding head (100) and is able to be disassembled relative to the friction stir welding head (100),
wherein the work interface accessory (10) comprises an external body (11) having a first side wall (12) delimiting a first recess (120) open on top for introduction of a rotating portion (301, 302) of the friction stir welding head (100) and for withdrawal of the friction stir welding head (100),
the work interface accessory (10) comprises an upper plate (13), which is fastened on an upper portion (121) of the first side wall (12) or which is integral with the upper portion (121) of the first side wall (12), which has a first upper opening (130) connected to the first recess (120) and which comprises fastening portions (131), allowing removable fastening against the friction stir welding head (100),
the work interface accessory (10) comprising a central shaft (14), which is rotatably assembled in the first side wall (12) around an axis of rotation (AX),
the central shaft (14) having a second lower portion (141), which projects from a first lower portion (122) of the first side wall (12) downwards and which is intended to carry a work tool (50),
the central shaft (14) comprising in the first recess (120) an internally toothed coupling sleeve (15) to allow the central shaft (14) to be driven in rotation, when an externally toothed ring gear (115) of the rotating portion (301, 302) of the head (100) is introduced into the sleeve (15) and rotates in the internally toothed coupling sleeve (15) around the axis of rotation (AX),
wherein the friction stir welding head (100) comprises a frame (300) and the lower rotating portion (301, 302), rotatably assembled relative to the frame (300) and protruding therefrom downwards, with the rotating portion (301, 302) of the head (100) comprising the externally toothed ring gear (115) to allow the internally toothed coupling sleeve (15) to be driven in rotation,
the frame (300) comprising a second plate (313) for bearing against the upper plate (13),
the second plate (313) comprising a gripping mechanism comprising a system of clamps (314), which is facing downwards and which is intended to be fastened on the fastening portions (131, 13) of the upper plate (13) of the accessory (10),
wherein the clamps (314) are actuatable by a pressurized fluid to be either in a position (P1) of gripping the fastening portions (131), or in a position (P2) of releasing the fastening portions (131),
wherein the head (100) comprises a source (3221) that can be controlled to supply or not to supply pressurized fluid to the clamps (314),
wherein the clamps (314) are configured such that the supply of the pressurized fluid to the clamps (314) causes them to move from the position (P1) of gripping of the fastening portions (131) to the position (P2) of releasing of the fastening portions (131) and such that the absence of supply of the pressurized fluid to the clamps (314) allows them to move from the position (P2) of releasing of the fastening portions (131) to the position (P1) of gripping of the fastening portions (131).

2. The work kit according to claim 1, **characterized in that** the clamps (314) each comprise an inlet (322) for supplying the pressurized fluid, the inlets (322) for supplying the pressurized fluid are connected to a share pipe (3320) for supplying the pressurized fluid,
wherein the pressurized fluid source (3221) is connected to the shared pipe (3320),
wherein the shared pipe (3320) is provided outside the frame (300), above the second plate (313).

3. The work kit according to claim 2, **characterized in that** the fastening portions (131, 13) of the upper plate (13) of the accessory (10) each comprise a pull tab (1311), which is facing upwards and which is fastened to the upper plate (13).

4. The work kit according to any one of claims 1 to 3, **characterized in that** the second plate (313) of the friction stir welding head (100) comprises a second sensor (341) for detecting a presence of the upper plate (13) of the work interface accessory (10).

5. The work kit according to any one of claims 1 to 4, **characterized in that** the work kit (500) further comprises a cradle (400), separate from the work interface accessory (10),
the cradle (400) comprising an upper support (411) and support elements (401, 402, 403, 404) fastened under the upper support (411) to maintain the upper support (411) at a determined height above a lower end (405) of the support elements (401, 402, 403, 404),
the upper support (411) being able to hold the upper plate (13) of the work interface accessory (10),
the upper support (411) comprising a second opening (410) facing upwards for the external body (11) of the work interface accessory (10) to pass through the second opening (410) between the support elements (401, 402, 403, 404), when the work interface accessory (10) is disposed in a storage position on the upper support (411).

6. The work kit according to claim 5, **characterized in that** the cradle (400) comprises a lower assembly panel (406), fastened to the lower end (405) of the support elements (401, 402, 403, 404).

7. The work kit according to claim 5 or 6, **characterized in that** the upper support (411) comprises a first sensor (441) for detecting a presence of the upper plate (13) of the work interface accessory (10).

8. The work kit according to any one of claims 1 to 7, **characterized in that** the work kit (100) further comprises as a work tool (50) a machining tool or a milling tool.

9. The work kit according to any one of the preceding claims, **characterized in that** at least one bearing (16a, 16b) for supporting rotation of the central shaft (14) around the axis of rotation (AX) is disposed between the central shaft (14) and the first side wall (12).

10. The work kit according to claim 9, **characterized in that** the at least one bearing (16a, 16b) for supporting rotation of the central shaft (14) is a bearing assembly (16a, 16b), comprising at least a first bearing guide (161a, 161b) fastened to the first side wall (12), at least a second bearing guide (162a, 162b), which is fastened to the central shaft (14) and which is rotatable relative to the first bearing guide (161a, 161b).

11. The work kit according to any one of the preceding claims, **characterized in that** the central shaft (14) comprises a second side wall (142) delimiting a second recess (140) open on top for introduction of the rotating portion (301, 302) of the head (100), the second recess (140) being comprised in the first recess (120), the internally toothed coupling sleeve (15) being fastened to the second side wall (142) or being integral with the second side wall (142) and extending the second recess (140).

12. The work kit according to claim 11, **characterized in that** the second side wall (142) has a horizontal width decreasing between the internally toothed coupling sleeve (15) and the second lower portion (141) of the central shaft (14).

13. The work kit according to claim 11 or 12, **characterized in that** the second side wall (142) comprises internal grooves (143) and/or external grooves (144).

14. The work kit according to claim 13, **characterized in that** the internal grooves (143) and/or the external grooves (144) are transverse to the axis of rotation (AX).

15. The work kit according to any one of the preceding claims, **characterized in that** the second lower portion (141) of the central shaft (14) comprises a central lower recess (145), in which the work tool (50) or a support (150) of the work tool (50) is intended to be fastened.

16. The work kit according to claim 15, **characterized in that** the second lower portion (141) of the central shaft (14) comprises, in addition to the central lower recess (145), at least one through channel (146) between the second recess (140) and an external surface (147) of the second lower portion (141).

17. A Method for welding parts using the work kit (100) according to any one of claims 5 to 16, when dependent at least on one of claims 5 to 7, **characterized in that**
during a first step (E1), the parts fastened on a table (600) are welded according to a welding trajectory using the friction stir welding head (100), one pin of which fastened to the lower rotating portion (301, 302) is rotated around the axis of rotation (AX) against the parts, the friction stir welding head (100) and the table (600) are moved relative to each other according to the welding trajectory (L), to make a welding line,
during a second step (E2) subsequent to the first step (E1), the welding head (100) and the table (600) are moved relative to each other to bring the welding head (100) above the first recess (120) of the work interface accessory (10), having been disposed on the upper support (411) of the cradle (400) having been fastened on the table (600), a work tool (50) or support of the work tool (150) having been fastened under the second lower portion (141) of the central shaft (14) of the work interface accessory (10),
during a third step (E3) subsequent to the second step (E2), the welding head (100) and the table (600) are moved relative to each other to introduce the welding head (100) into a second recess (140) of the central shaft (14) of the work interface accessory (10), so as to mesh the externally toothed ring gear (115) of the rotating portion (301, 302) of the welding head (100) with the internally toothed coupling sleeve (15) of the central shaft (14) of the work interface accessory (10), and the clamps (314) of the welding head (100) are actuated to grip the fastening portions (131) of the work interface accessory (10),
during a fourth step (E4) subsequent to the third step (E3), the welding head (100) and the table (600) are moved relative to each other to lift with the welding head (100) the work interface accessory (10) above the cradle (400),
during a fifth step (E5) subsequent to the fourth step (E4), the welding head (100) and the table (600) are moved relative to each other to bring the work tool (50) against the welding line of the parts by rotating around the axis of rotation (AX) the lower rotating portion (301, 302) of the welding head (100), the friction stir welding head (100) and the table (600) being moved relative to each other according to the welding trajectory (L).

18. The method for welding parts according to claim 17, **characterized in that**
during a sixth step (E6) subsequent to the fifth step (E5), the welding head (100) and the table (600) are moved relative to each other to move the work tool (50) away from the welding line of the parts and bring the work interface accessory (10) above the cradle (400), the rotation of the lower rotating portion (301, 302) of the welding head (100) is stopped,
during a seventh step (E7) subsequent to the sixth step (E6), the welding head (100) and the table (600) are moved relative to each other to dispose the work interface accessory (10) on the upper support (411) of the cradle (400),
during an eighth step (E8) subsequent to the seventh step (E7), the clamps (314) of the welding head (100) are actuated to release the fastening portions (131) of the work interface accessory (10), then the welding head (100) and the table (600) are moved relative to each other to withdraw the welding head (100) out of the work interface accessory (10).
